(19) 

Europäisches Patentamt
European Patent Office
Office européen des brevets

(11) **EP 2 360 659 A1**

(12) **EUROPEAN PATENT APPLICATION**
published in accordance with Art. 153(4) EPC

(43) Date of publication:
**24.08.2011 Bulletin 2011/34**

(21) Application number: **09810049.8**

(22) Date of filing: **28.08.2009**

(51) Int Cl.:
***G09C 1/00*** *(2006.01)*

(86) International application number:
**PCT/JP2009/065099**

(87) International publication number:
**WO 2010/024401 (04.03.2010 Gazette 2010/09)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **29.08.2008 JP 2008222556**

(71) Applicant: **National University Corporation Okayama University**
**Kita-ku**
**Okayama-shi**
**Okayama 700-8530 (JP)**

(72) Inventors:
• **NOGAMI, Yasuyuki**
**Okayama-shi**
**Okayama 700-8530 (JP)**

• **AKANE, Masataka**
**Inazawa-shi, Aichi 492-8161 (JP)**
• **SAKEMI, Yumi**
**Okayama-shi**
**Okayama 700-8530 (JP)**
• **MORIKAWA, Yoshitaka**
**Okayama-shi**
**Okayama 700-8530 (JP)**

(74) Representative: **Müller-Boré & Partner**
**Patentanwälte**
**Grafinger Straße 2**
**81671 München (DE)**

(54) **PAIRING COMPUTATION DEVICE, PAIRING COMPUTATION METHOD, AND PAIRING COMPUTATION PROGRAM**

(57) Provided are a pairing computation device, a pairing computation method, and a pairing computation program all of which enable fast pairing computation. The pairing computation device includes, where:

E is an additive group of rational points on a pairable elliptic curve defined over $F_p{}^k$ with an embedding degree of k, and the curve equation is given by $y^2=x^3+ax+b$ where $a \in F_p$ and $b \in F_p$,

E[r] is a set of rational points of a prime order r,

$\varphi_p$ is Frobenius endomorphism, and

the order r and a trace t of the Frobenius endomorphism $\varphi_p$ are used as functions of an integer variable $\chi$:

computation means for computing a rational function $f_{\chi,Q}(S)$;

computation means for computing a value of a rational point $S(x_s, y_s)$ on a line passing through a predetermined rational point;

computation means for computing a rational function $f'_{\chi,Q}(S)$ using computation results of these computation means; and

computation means for performing pairing computation by using the rational function $f'_{\chi,Q}(S)$ as Formula (1):

$$e(Q,S) = f'_{\chi,Q}(S)^{(p^k-1)/r} \qquad (1).$$

START
INPUT INTEGER VARIABLE $\chi$, RATIONAL POINTS Q, S — S1
COMPUTE $f_{\chi,Q}(S)$ (COMPUTE $\chi$Q) — S2
COMPUTE RATIONAL POINTS $p^{10}\chi Q$, $\chi Q+p^{10}\chi Q$, $p\chi Q+p^3\chi Q$ — S3
COMPUTE VALUE I OF RATIONAL POINT S ON LINE PASSING THROUGH PREDETERMINED RATIONAL POINT — S4
COMPUTE $f'_{\chi,Q}(S)$ — S5
PERFORM EXPONENTIATION OF $F'_{\chi,Q}(S)^{(p12-1)/r}$ — S6
Return

Fig. 2

EP 2 360 659 A1

**Description**

TECHNICAL FIELD

The present invention relates to a pairing computation device, a pairing computation method, and a pairing computation program all of which enable fast pairing computation.

BACKGROUND ART

Conventionally, when an individual user uses a variety of services offered over a network such as the Internet, an authentication process is carried out to verify that the individual user is a legitimate user. In such an authentication process, authentication generally uses an ID and a password preset for each individual user. For this purpose, a network is provided with an authentication server for carrying out an authentication process.

Recently, using a digital signature technique, digital signature data unique to an individual user is attached to individual data. This digital signature data ensures that data utilized by an individual user is not tampered by outsiders or is not leaked to outsiders, so that confidential information can be safely handled over a network.

Meanwhile, with a digital signature, an individual user is identified in association with an authentication process at an authentication server, and as a result, history of each individual user is accumulated as information one after another in the authentication server every time an authentication process is performed. Therefore, private information such as which site individual users have accessed and which service they have used is accumulated in the authentication server. Thus, in terms of protection of personal information, great caution is given to prevent leakage of such information.

In order to solve accumulation of history information of individual users caused by the use of digital signatures, it is proposed to use a digital group signature, which is the extended digital signature.

When a digital group signature is used, an individual user transmits, to an authentication server, signature data that certificates that the individual user anonymously belongs to a particular group. The authentication server then verifies that the individual user belongs to a particular group without specifying the individual user from the received signature data. Therefore, while preventing fraud by an individual user who does not belong to a group, the authentication server authenticates an individual user without accumulating history information for each individual user.

For anonymous authentication in such a digital group signature, pairing computation is used.

Pairing computation uses a two-input and one-output function. For example, letting S be a rational point over a prime field $F_p$ and Q be a rational point over a k-degree extension field $F_p{}^k$, when the two rational points S and Q are input, an element z in the extension field $F^*_p{}^k$ is output. Moreover, pairing computation has a bilinear property such that when a times of the rational point S and b times of the rational point Q are input, the ab-th power of z is calculated. This bilinearity is utilized in authentication. Here, "k" is an embedding degree, and "$F^*_p{}^k$" is, strictly speaking, expressed as:

$$[\text{Formula 1}]$$

$$F^{*}{}_{p^k}$$

in mathematical representation, but is here represented as "$F^*_p{}^k$" due to limitations in expression.

In general, for each of the rational points S, Q, a point on an elliptic curve is used. The pairing computation of a rational point on an elliptic curve includes a step of performing computation according to Miller's algorithm and a step of performing exponentiation on the computation result.

With a digital group signature, when access right of an individual user belonging to a group is authenticated, a pairing computation is first performed for excluding an individual user whose access right expires. Then, with the digital group signature, an authentication process is performed through a pairing computation for a predetermined individual user, so that an attribute change such as issue or expiration of access right for each individual user is flexibly handled.

Then, for example, in a case of a digital group signature for a group consisting of 10,000 individual users, if there are 100 individual users whose access rights expire, 100 pairing computations are required. At present, one pairing computation by a general electronic calculator requires about 0.1 second. Accordingly, 100 pairing computations require about 10 seconds. Therefore, in the present situation, a digital group signature scheme is not deemed to be practical and has not been widely used.

In the present situation, in order to put digital group signatures into practical use, researches are focused on improving the speed of pairing computations. For example, a technique for achieving fast pairing computations proposes using Tate pairing computation defined over an elliptic curve to reduce the computation load (see, for example, Patent Document 1).

Patent Document 1: Japanese Patent Application Publication No. 2005-316267

DISCLOSURE OF INVENTION

PROBLEMS TO BE SOLVED BY THE INVENTION

However, the currently proposed techniques for faster pairing computation have not yet been sufficient, and there has been a growing demand for further acceleration of computation.

In view of the present situation, the present inventors have conducted research and development to increase the pairing computation speed and have conceived the present invention.

MEANS FOR SOLVING THE PROBLEMS

A pairing computation device according to the present invention is for defining pairing e by using:

$$G_1 = E[r] \cap Ker(\varphi_p - [1]),$$

and

$$G_2 = E[r] \cap Ker(\varphi_p - [p]),$$

as a nondegenerate bilinear map:

$$e : G_2 \times G_1 \rightarrow F^*_p{}^k / (F^*_p{}^k)^r,$$

where:

E is an additive group of rational points on a pairable elliptic curve defined over $F_p{}^k$ with an embedding degree of k, and the curve equation is given by $y^2 = x^3 + ax + b$ where $a \in F_p$ and $b \in F_p$,
E[r] is a set of rational points of a prime order r, and
$\varphi_p$ is Frobenius endomorphism,

computing pairing e(Q,S) where $S \in G_1$ and $Q \in G_2$, and outputting a result of the computation. The pairing computation device includes, where t is a trace of the Frobenius endomorphism $\varphi_p$, instead of computing the pairing e(Q,S) by using a rational function $f_{t-1,Q}(S)$ calculated according to Miller's algorithm as:

[Formula 2]

$$e(Q,S) = f_{t-1,Q}(S)^{(p^k-1)/r},$$

and
the order r and the trace t of the Frobenius endomorphism $\varphi_p$ are used as functions of an integer variable $\chi$:

computation means for computing a rational function $f_{\chi,Q}(S)$;
computation means for computing a value of a rational point $S(x_s, y_s)$ on a line passing through a predetermined rational point;
computation means for computing a rational function $f'_{\chi,Q}(S)$ using computation results of these computation means; and

computation means for performing pairing computation by using the rational function $f'_{\chi,Q}(S)$ as:

[Formula 3]

$$e(Q,S) = f'_{\chi,Q}(S)^{(p^k-1)/r} .$$

The pairing computation device according to the present invention is characterized in that the computation means for computing the rational function $f_{\chi,Q}(S)$ includes computation means for computing $\chi Q$, storing a result of the computation in a predetermined register, and computing the predetermined rational point by using the result of the computation of $\chi Q$.

Furthermore, the pairing computation device according to the present invention is characterized in that, if the embedding degree k=12, using the integer variable $\chi$, letting the order r and the trace t of the Frobenius endomorphism $\varphi_p$ be:

$$r(\chi) = 36\chi^4 - 36\chi^3 + 18\chi^2 - 6\chi + 1,$$

$$t(\chi) = 6\chi^2 + 1,$$

letting $\chi Q=R$, using a relation of Frobenius endomorphism $\varphi_p$ of R being $\varphi_p(R)=pR$, rational points $p^{10}\chi Q$, $\chi Q+p^{10}\chi Q$, $p\chi Q+p^3\chi Q$ are computed,
a value $l_1$ of the rational point S ($x_s$, $y_s$) on a line passing through rational points ($\chi Q$, $p^{10}\chi Q$) and a value $l_2$ of the rational point S($x_s$, $y_s$) on a line passing through rational points ($\chi Q+p^{10}\chi Q$, $p\chi Q+p^3\chi Q$) are computed, and
the rational function $f'_{\chi,Q}(S)$ is computed by using a value $l_3$ of the rational point S($x_s$, $y_s$) on a line passing through rational points ($p\chi Q$, $p^3\chi Q$) as:

[Formula 4]

$$f'_{\chi,Q}(S) = f_{\chi,Q}(S)^{1+p+p^3+p^{10}} \cdot l_1 \cdot l_2 \cdot l_3 .$$

Moreover, the pairing computation device according to the present invention is characterized in that using Frobenius endomorphism $\varphi_p$ of the rational function $f_{\chi,Q}(S)$ being $\varphi_p(f_{\chi,Q}(S))=f_{\chi,Q}(S)^p$,

[Formula 5]

$$f_{\chi,Q}(S)^{1+p^{10}} \cdot l_1$$

is computed, and
using Frobenius endomorphism $\varphi_p$ of a value 1 of the rational point S($x_s$, $y_s$) on a line passing through rational points ($Q_1$, $Q_2$), $Q_1,Q_2 \in G_2$, being a value of the rational point S($x_s$, $y_s$) on a line passing through rational points ($pQ_1$, $pQ_2$), the rational function $f'_{\chi,Q}(S)$ is computed by computing:

[Formula 7]

$$f_{\chi,Q}(S)^{p+p^3} \cdot l_3$$

which satisfies:

[Formula 6]

$$f_{\chi,Q}\left(S\right)^{p+p^3} \cdot l_3 = \phi_p^3 (f_{\chi,Q}\left(S\right)^{1+p^{10}} \cdot l_1).$$

A pairing computation method according to the present invention is for defining pairing e by using:

$$G_1 = E[r] \cap Ker(\varphi_p - [1]),$$

and

$$G_2 = E[r] \cap Ker(\varphi_p - [p]),$$

as a nondegenerate bilinear map:

$$e: G_2 \times G_1 \rightarrow F^*{}_p{}^k / (F^*{}_p{}^k)^r,$$

where:

E is an additive group of rational points on a pairable elliptic curve defined over $F_p{}^k$ with an embedding degree of k, and the curve equation is given by $y^2 = x^3 + ax + b$ where $a \in F_p$ and $b \in F_p$,
E[r] is a set of rational points of a prime order r, and
$\varphi_p$ is Frobenius endomorphism, and

computing pairing e(Q,S) where $S \in G_1$ and $Q \in G_2$ by an electronic calculator including a CPU. The pairing computation method includes steps of, where t is a trace of the Frobenius endomorphism $\varphi_p$, instead of computing the pairing e(Q, S) by using a rational function $f_{t-1,Q}(S)$ calculated according to Miller's algorithm as:

[Formula 2]

$$e(Q,S) = f_{t-1,Q}(S)^{(p^k-1)/r},$$

and
the order r and the trace t of the Frobenius endomorphism $\varphi_p$ are used as functions of an integer variable $\chi$:

causing the CPU of the electronic calculator to function as computation means for computing a rational function $f_{\chi,Q}(S)$;
causing the CPU of the electronic calculator to function as computation means for computing a value of a rational point $S(x_s, y_s)$ on a line passing through a predetermined rational point;
causing the CPU of the electronic calculator to function as computation means for computing a rational function $f'_{\chi,Q}(S)$ using results of the computations; and
causing the CPU of the electronic calculator to function as computation means for performing computation by using the rational function $f'_{\chi,Q}(S)$ as:

[Formula 3]

$$e(Q,S) = f'_{\chi,Q}(S)^{(p^k-1)/r}.$$

The pairing computation method according to the present invention is characterized by further including a step of causing the CPU of the electronic calculator to function as computation means for computing $\chi Q$ and computing the predetermined rational point by using the result of the computation of $\chi Q$, after the step of computing the rational function $f_{\chi,Q}(S)$.

A pairing computation program according to the present invention is for defining pairing e by using:

$$G_1 = E[r] \cap Ker(\varphi_p - [1]),$$

and

$$G_2 = E[r] \cap Ker(\varphi_p - [p]),$$

as a nondegenerate bilinear map:

$$e: G_2 \times G_1 \to F^*_p{}^k / (F^*_p{}^k)^r,$$

where:

E is an additive group of rational points on a pairable elliptic curve defined over $F_p{}^k$ with an embedding degree of k, and the curve equation is given by $y^2 = x^3 + ax + b$ where $a \in F_p$ and $b \in F_p$,
E[r] is a set of rational points of a prime order r, and
$\varphi_p$ is Frobenius endomorphism, and

causing an electronic calculator including a CPU to compute pairing $e(Q,S)$ where $S \in G_1$ and $Q \in G_2$. The pairing computation program causes the electronic calculator to function as, where t is a trace of the Frobenius endomorphism $\varphi_p$, instead of causing computation of the pairing $e(Q,S)$ by using a rational function $f_{t-1,Q}(S)$ calculated according to Miller's algorithm as:

[Formula 2]

$$e(Q,S) = f_{t-1,Q}(S)^{(p^k - 1)/r},$$

and
the order r and the trace t of the Frobenius endomorphism $\varphi_p$ are used as functions of an integer variable $\chi$:

computation means for computing a rational function $f_{\chi,Q}(S)$;
computation means for computing a value of a rational point $S(x_s, y_s)$ on a line passing through a predetermined rational point;
computation means for computing a rational function $f'_{\chi,Q}(S)$ using results of the computations; and
computation means for performing computation by using the rational function $f'_{\chi,Q}(S)$ as:

[Formula 3]

$$e(Q,S) = f'_{\chi,Q}(S)^{(p^k - 1)/r}.$$

The pairing computation program according to the present invention is characterized in that the program causes the electronic calculator to function as computation means for computing $\chi Q$ and computation means for computing the predetermined rational point by using the result of the computation of $\chi Q$.

EFFECTS OF THE INVENTION

In accordance with the present invention, a rational function calculated according to Miller's algorithm in pairing computation is given as a function of an integer variable $\chi$, so that the rational function can be calculated at high speed, thereby achieving faster pairing computation. Therefore, it is possible to provide digital group signature service of practical use.

BRIEF DESCRIPTION OF THE DRAWINGS

[Fig. 1] is a schematic diagram of a pairing computation device according to an embodiment of the present invention.
[Fig. 2] is a flowchart of a pairing computation program according to the embodiment of the present invention.
[Fig. 3] is a flowchart for computing a rational function $f_{\chi,Q}(S)$.
[Fig. 4] is a flowchart of a pairing computation program according to another embodiment of the present invention.

DESCRIPTION OF THE REFERENCE SIGNS

10    electronic calculator
11    CPU
12    storage device
13    memory device
14    bus
15    input/output control unit
20    electrical communication line
30    client device

BEST MODE(S) FOR CARRYING OUT THE INVENTION

A pairing computation device, a pairing computation method, and a pairing computation program according to the present invention perform pairing computation including a first step of computing a rational function according to Miller's algorithm and a second step of performing exponentiation on the computation result. In the first step, the pairing computation device, the pairing computation method, and the pairing computation program compute a rational function using an integer variable $\chi$ to speed up the computation.

Specifically, in the conventional pairing computation, pairing e is defined by using:

$$G_1 = E[r] \cap \mathrm{Ker}(\varphi_p - [1]),$$

and

$$G_2 = E[r] \cap \mathrm{Ker}(\varphi_p - [p]),$$

as a nondegenerate bilinear map:

$$e : G_2 \times G_1 \rightarrow F^{*\,k}_{\,p} / (F^{*\,k}_{\,p})^r,$$

where:

E is an additive group of rational points on a pairable elliptic curve defined over $F_p^{\,k}$ with an embedding degree of k, and the curve equation is given by $y^2 = x^3 + ax + b$ where $a \in F_p$ and $b \in F_p$,

E[r] is a set of rational points of a prime order r, and
$\varphi_p$ is Frobenius endomorphism, and

pairing e(Q,S) is computed where $S \in G_1$ and $Q \in G_2$, and t is a trace of the Frobenius endomorphism $\varphi_p$, by using a rational function $f_{t-1,Q}(S)$ calculated according to Miller's algorithm by the following formula known as Ate pairing:

[Formula 2]

$$e(Q,S) = f_{t-1,Q}(S)^{(p^k-1)/r}.$$

By contrast, the present inventors have found pairing that allows for faster computation by using an integer variable $\chi$ on an elliptic curve. This pairing is referred to as "Xate pairing."

In other words, the pairing computation device, the pairing computation method, and the pairing computation program according to the present invention use Xate pairing rather than Ate pairing, thereby enabling fast computation.

In particular, the elliptic curves used in pairing computation are known as pairing-friendly curves corresponding to the respective embedding degrees. For example, with an embedding degree k=12, the order r and the trace t of the Frobenius endomorphism $\varphi_p$ are known to be represented as follows using the integer variable $\chi$:

$$r(\chi) = 36\chi^4 - 36\chi^3 + 18\chi^2 - 6\chi + 1,$$

$$t(\chi) = 6\chi^2 + 1.$$

With an embedding degree k=10, r and t are known to be represented as follows:

$$r(\chi) = 25\chi^4 + 25\chi^3 + 15\chi^2 + 5\chi + 1,$$

$$t(\chi) = 10\chi^2 + 5\chi + 3.$$

Alternatively, they are also known to be represented as follows:

$$r(\chi) = \chi^8 - 1,$$

$$t(\chi) = -\chi^6 + \chi^4 - \chi^2 + 2.$$

With an embedding degree k=8, r and t are known to be represented as follows:

$$r(\chi) = 9\chi^4 + 12\chi^3 + 8\chi^2 + 4\chi + 1,$$

$$t(\chi) = -9\chi^3 - 3\chi^2 - 2\chi.$$

Alternatively, they are also known to be represented as follows:

$$r(\chi) = \chi^4 - 8\chi^2 + 25,$$

$$t(\chi) = (2\chi^3 - 11\chi + 15)/15.$$

Alternatively, they are also known to be represented as follows:

$$r(\chi) = \chi^8 - \chi^4 + 1,$$

$$t(\chi) = \chi^5 - \chi + 1.$$

With an embedding degree k=18, r and t are known to be represented as follows:

$$r(\chi) = (\chi^6 + 37\chi^3 + 343)/343,$$

$$t(\chi) = (\chi^4 + 16\chi + 7)/7.$$

In the following, Xate pairing will be described with the embedding degree k=12, by way of example.
With the embedding degree k=12, pairing e is defined by using:

$$G_1 = E[r] \cap Ker(\varphi_p - [1]),$$

and

$$G_2 = E[r] \cap Ker(\varphi_p - [p]),$$

as a nondegenerate bilinear map:

$$e: G_2 \times G_1 \rightarrow F^*_p{}^{12}/(F^*_p{}^{12})^r$$

where:

E is an additive group of rational points on a pairable elliptic curve defined over $F_p{}^{12}$, and the curve equation is given by $y^2 = x^3 + b$ where $b \in F_p$, E[r] is a set of rational points of a prime order r, and $\varphi_p$ is Frobenius endomorphism.

In this case, the order r and the trace t of the Frobenius Endomorphism $\varphi_p$ can be represented as follows using the integer variable $\chi$ as described above.

$$r(\chi) = 36\chi^4 - 36\chi^3 + 18\chi^2 - 6\chi + 1 \qquad (Equasion\ 1)$$

$$t(\chi) = 6\chi^2 + 1 \quad (Equasion\ 2)$$

Equasion 2 can be transformed as follows. Here, the notation ($\chi$) will be omitted unless particularly necessary, for the sake of convenience.

$$6\chi^2 \equiv t-1 \equiv p \pmod{r} \qquad \text{(Equasion 3)}$$

Here, a characteristic p has the following relational expression.

$$p = r+t-1 \qquad \text{(Equasion 4)}$$

Therefore, the characteristic p is represented as follows using the integer variable $\chi$.

$$p(\chi) = 36\chi^4 - 36\chi^3 + 24\chi^2 - 6\chi + 1 \qquad \text{(Equasion 5)}$$

Using Equasion 3, Equasion 5 can be transformed as follows.

$$p \equiv p^2 - 6\chi(p+1) + 4p + 1 \pmod{r} \qquad \text{(Equasion 6)}$$

Equasion 6 can be transformed as follows.

$$6\chi(1+p) \equiv p^2 + 3p + 1 \pmod{r} \qquad \text{(Equasion 7)}$$

Here, based on the already-known relational expression $p^4 - p^2 + 1 \equiv 0 \pmod{r}$, the following equation is obtained.

$$p^2(1-p)(1+p) \equiv 1 \pmod{r} \qquad \text{(Equasion 8)}$$

Equasion 8 can be transformed as follows.

$$(1+p)^{-1} \equiv p^2(1-p) \pmod{r} \qquad \text{(Equasion 9)}$$

Using Equasion 9 and from the relational expression $p^6 \equiv -1 \pmod{r}$, Equasion 7 can be transformed as follows.

$$6\chi \equiv (1+p)^{-1}\{(1+p)^2 + p\}$$
$$\equiv 1 + p + p^3 + p^{10} \pmod{r} \qquad \text{(Equasion 10)}$$

Next, a rational function $f_{t-1,Q}(\cdot)$ of Ate pairing will be considered. In particular, with Equasion 3, the rational function $f_{t-1,Q}(\cdot)$ can be represented as follows, where t-1=T:

[Formula 8]

$$f_{6\chi^2,Q} = f_{T,Q} \qquad \text{(Equasion 11).}$$

Here, $Q \in G_2$, and for $\forall S \in G_1$, the following equation is given:

[Formula 9]

$$f_{6\chi^2,Q}(S)^{(p^{12}-1)/r} = f_{T,Q}(S)^{(p^{12}-1)/r} = \alpha(Q,S)$$

(Equasion 12).

Using Equation 10, the following equation is obtained:

[Formula 10]

$$f_{6\chi^2,Q} = f_{6\chi\cdot\chi,Q} = f_{(1+p+p^3+p^{10})\chi,Q}$$

(Equasion 13).

Here, it is supposed that the rational function satisfies the following relational expressions:

[Formula 11]

$$f_{a+b,Q} = f_{a,Q} \cdot f_{b,Q} \cdot g_{aQ,bQ}$$

(Equasion 14),

[Formula 12]

$$f_{ab,Q} = f_{b,Q}^a \cdot f_{a,bQ} = f_{a,Q}^b f_{b,aQ}$$

(Equasion 15),

and

[Formula 13]

$$f_{p^i,Q} = f_{p,Q}^{ip^{i-1}}$$

(Equasion 16).

Therefore, Equasion 13 can be transformed as follows:

[Formula 14]

$$f_{(1+p+p^3+p^{10})\chi,Q} = f_{\chi,Q} \cdot f_{\chi,Q}^p \cdot g_{\chi Q,p\chi Q} \cdot f_{\chi,Q}^{p^3} \cdot f_{\chi,Q}^{p^{10}} \cdot g_{p^3\chi Q,p^{10}\chi Q}$$
$$g_{\chi Q+p\chi Q,p^3\chi Q+p^{10}\chi Q} \cdot f_{p,\chi Q}^{1+3p^2+10p^9}$$

(Equasion 17).

Here, $g_{aQ,bQ} = l_{aQ,bQ}/V_{aQ+bQ}$, where $l_{aQ,bQ}$ denotes a value on the line passing through two rational points aQ and bQ, and $V_{aQ+bQ}$ denotes a value on the vertical line of rational point aQ+bQ. When the embedding degree is an even number, the computation of $V_{aQ+bQ}$ can be omitted.

Furthermore, in Equasion 17,

[Formula 15]

$$f_{p,\chi Q}^{1+3p^2+10p^9}$$ (Equasion 18)

has bilinearity and can be transformed as follows:

[Formula 16]

$$f_{p,Q}^{\chi(1+3p^2+10p^9)}$$ (Equasion 19).

Therefore, using Equasion 3, Equasion 13, and Equasion 19, the transformation of Equasion 17 results in the following.

[Formula 17]

$$f_{p,Q} \cdot \left\{ f_{p,Q}^{\chi(1+3p^2+10p^9)} \right\}^{-1} = f_{\chi,Q} \cdot f_{\chi,Q}^{p} \cdot g_{\chi Q, p\chi Q} \cdot f_{\chi,Q}^{p^3} \cdot f_{\chi,Q}^{p^{10}} \cdot g_{p^3\chi Q, p^{10}\chi Q} \cdot g_{\chi Q + p\chi Q, p^3\chi Q + p^{10}\chi Q}$$ (Equasion 20).

Here, given that the left side of Equasion 20 has bilinearity, the present inventors have noticed that the right side of Equasion 20 has also bilinearity and set the right side of Equasion 20 as a new rational function $f'_{\chi,Q}(\cdot)$.

More specifically, the computation of pairing e(Q,S) is carried out by the following equation:

[Formula 18]

$$e(Q,S) = f'_{\chi,Q}(S)^{(p^{12}-1)/r}$$ .

The present inventors call this pairing e(Q,S) as Xate pairing.

Furthermore, the right side of Equasion 20 can be transformed as follows:

[Formula 19]

$$f_{\chi,Q}^{1+p+p^3+p^{10}} \cdot g_{\chi Q, p^{10}\chi Q} \cdot g_{p\chi Q, p^3\chi Q} \cdot g_{\chi Q + p^{10}\chi Q, p\chi Q + p^3\chi Q}$$ (Equasion 21).

In other words, in the case of the embedding degree k=12, if a value $l_1$ of a rational point S $(x_s, y_s)$ on a line passing through rational points $(\chi Q, p^{10}\chi Q)$, a value $l_2$ of a rational point $S(x_s, y_s)$ on a line passing through rational points $(\chi Q + p^{10}\chi Q, p\chi Q + p^3\chi Q)$, and a value $l_3$ of a rational point S $(x_s, y_s)$ on a line passing through rational points $(p\chi Q, p^3\chi Q)$ are calculated and specified, the computation according to Miller's algorithm can be speeded up based on the following equation:

[Formula 4]

$$f'_{\chi,Q}(S) = f_{\chi,Q}(S)^{1+p+p^3+p^{10}} \cdot l_1 \cdot l_2 \cdot l_3 \,.$$

Moreover, the right side of Equasion 20 can be transformed as follows, which makes the computation of $f'_{\chi,Q}(S)$ even faster:

[Formula 20]

$$\left\{ f_{\chi,Q}^{1+p^{10}} \cdot g_{\chi Q, p^{10}\chi Q} \right\}^{1+p^3} \cdot g_{\chi Q + p^{10}\chi Q, p\chi Q + p^3\chi Q} \qquad (\text{Equasion 22}).$$

As described above, if pairing computation is carried out using Xate pairing, the computation can be performed using the rational function $f_{\chi,Q}(S)$ and a new rational function $f'_{\chi,Q}(S)$ obtained by using the values on the lines passing through predetermined rational points. In particular, the rational function $f'_{\chi,Q}(S)$ can be computed using $\chi$ having a size smaller than t-1, thereby achieving faster pairing computation.

The description has been given so far to the case of the embedding degree k=12. This is basically applicable to the cases of the embedding degrees k=8, 10, 18, and therefore, a detailed description thereof will not be repeated.

In the following, an embodiment with embedding degree k=12 will be detailed. It is noted that the present embodiment is intended for digital group signatures, and an authentication server configured with a predetermined electronic calculator is assumed as the pairing computation device. However, the pairing computation device may not be configured as an authentication server and may be any device as long as it includes at least computing means such as CPU and can perform pairing computation.

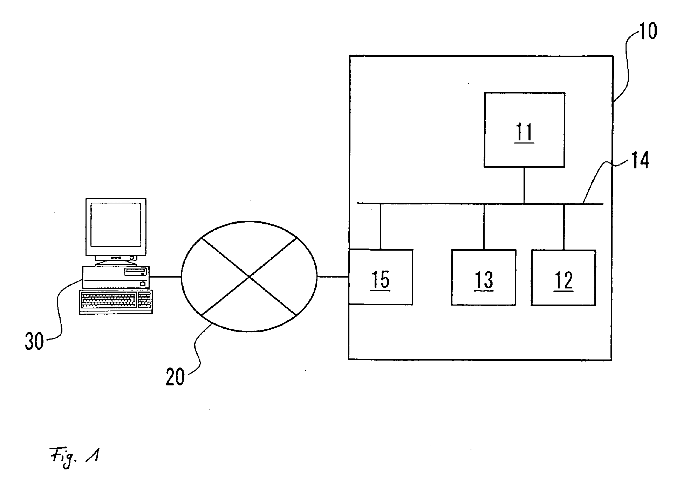

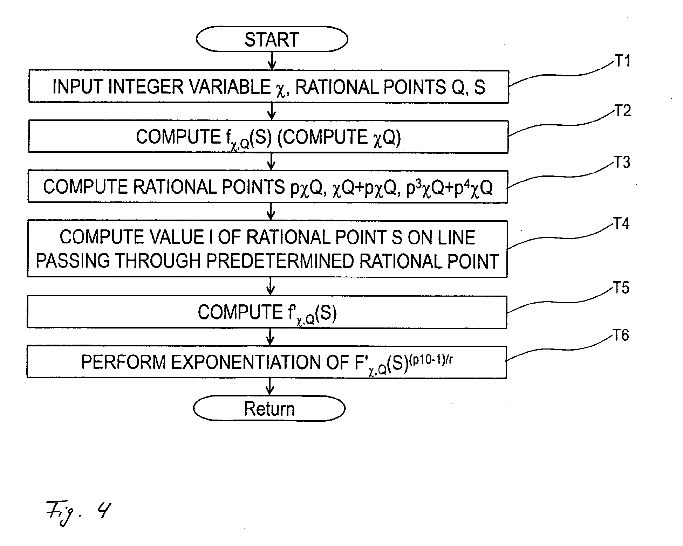

As shown in Fig. 1, an electronic calculator 10 which configures an authentication server includes a CPU 11 for performing computation, a storage device 12 such as a hard disk for storing a variety of programs such as a pairing computation program and data for use in the pairing computation program, and a memory device 13 configured with a RAM, for example, for expanding the pairing computation program so as to be executable and for temporarily storing data generated by execution of the pairing computation program. Fig. 4 also shows a bus 14.

The electronic calculator 10 is also connected to an electrical communication line 20 such as the Internet so as to be able to receive signature data of a digital group signature transmitted from a client device 30 connected to the electrical communication line 20. Fig. 1 shows that the electronic calculator 10 includes an input/output control unit 15.

When signature data of a digital group signature is transmitted from the client device 30 to the electronic calculator 10, the transmitted signature data is temporarily stored in the memory device 13. Then, the electronic calculator 10 performs pairing computation by executing the pairing computation program.

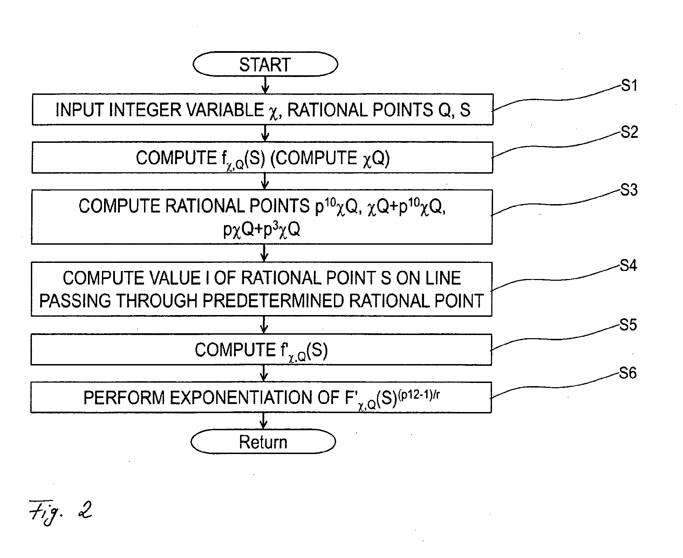

More specifically, upon execution of the pairing computation program, the electronic calculator 10 performs pairing computation based on a flowchart shown in Fig. 2 to implement a digital group signature. It is noted that the authentication process in the digital group signature will not be detailed, and only the pairing computation as a subroutine in the authentication process will be detailed.

With the pairing computation program, the CPU 11 of the electronic calculator 10 functions as input means for inputting required data in step S1 as shown in Fig. 2. More specifically, in the electronic calculator 10, data of an integer variable $\chi$ and data of a rational point Q stored beforehand in the memory device 13 are input in a predetermined register provided inside the CPU 11, and in addition, data of a rational point S temporarily stored as signature data in the memory device 13 is input in a predetermined register provided inside the CPU 11.

Then, with the pairing computation program, the CPU 11 of the electronic calculator 10 functions as first computation means for performing computation of a rational function $f_{\chi,Q}(S)$ by Miller's algorithm, in step S2.

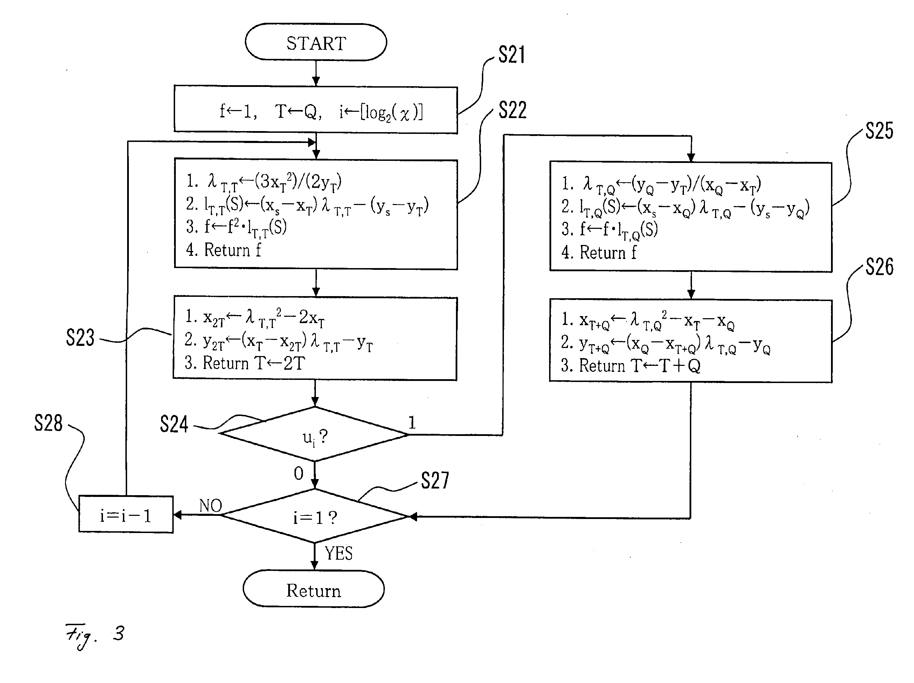

Specifically, the computation of the rational function $f_{\chi,Q}(S)$ is executed as shown in a flowchart in Fig. 3. In particular, in step S2, the computation of $\chi Q$ is performed along with the computation of the rational function $f_{\chi,Q}(S)$, and the result of the computation of $\chi Q$ is stored in a predetermined register provided inside the CPU 11.

More specifically, based on the flowchart in Fig. 3, the electronic calculator 10 performs initial settings in step S21. More specifically, the electronic calculator 10 performs an operation to set $f \leftarrow 1$, $T \leftarrow Q$, and $i \leftarrow [\log_2(\chi)]$, where i is the number of bits if the integer variable $\chi$ is in binary representation.

Then, based on the flowchart in Fig. 3, the electronic calculator 10 performs a predetermined computation for the rational function $f_{\chi,Q}(S)$ part, in step S22.

Then, based on the flowchart in Fig. 3, the electronic calculator 10 performs a predetermined computation for the χQ part, in step S23.

Then, based on the flowchart in Fig. 3, the electronic calculator 10 determines whether value $u_i$ of the i-th bit of the integer variable χ is "1" or "0", in step S24.

If $u_i$=1, based on the flowchart in Fig. 3, the electronic calculator 10 performs a predetermined computation for the rational function $f_{\chi,Q}(S)$ part, in step S25, and then performs a predetermined computation for the χQ part, in step S26.

Then, based on the flowchart in Fig. 3, the electronic calculator 10 performs a termination determination, in step S27.

If i≠1 in step S27, based on the flowchart in Fig. 3, the electronic calculator 10 decrements i in step S28, and then, returning to step S22, repeatedly performs the computations of the rational functions $f_{\chi,Q}(S)$ and χQ until i=1 in step S27.

If i=1 in step S27, the electronic calculator 10 stores the computation result of the rational function $f_{\chi,Q}(S)$ and the computation result of χQ in predetermined registers and then ends the subroutine based on the flowchart in Fig. 3.

Then, with the pairing computation program, the CPU 11 of the electronic calculator 10 functions as second computation means for computing rational points $p^{10}\chi Q$, $\chi Q+p^{10}\chi Q$, $p\chi Q+p^3\chi Q$, in step S3.

In particular, in the second computation means, letting χQ stored in the predetermined register in step S2 =R, using the relation of Frobenius endomorphism $\varphi_p$ of R being $\varphi_p(R)=pR$, computation is performed by assuming that the rational points are $p^{10}\chi Q=p^{10}R$, $\chi Q+p^{10}\chi Q=R+p^{10}R$, $p\chi Q+p^3\chi Q=pR+p^3R$.

Specifically, given T=χQ=R where $X=p^{10}R$, $Y=R+p^{10}R$, $Z=pR+p^3R$, the electronic calculator 10 performs computation as follows:

$$X \leftarrow \varphi_p^{10}(T),$$

$$Y \leftarrow T+X,$$

and

$$Z \leftarrow \varphi_p^{3}(Y).$$

Therefore, since the electronic calculator 10 can perform computation without performing a multiplication process in step S3, the computation can be speeded up.

Then, with the pairing computation program, the CPU 11 of the electronic calculator 10 functions as third computation means for computing the value $l_1$ of the rational point $S(x_s, y_s)$ on the line passing through the rational points $(\chi Q, p^{10}\chi Q)$ and the value $l_2$ of the rational point $S(x_s, y_s)$ on the line passing through the rational points $(\chi Q+p^{10}\chi Q, p\chi Q+p^3\chi Q)$, in step S4.

Specifically, in the electronic calculator 10, $l_1=l_{T,X}(S)$ is computed as follows:

$$\lambda_{T,X} \leftarrow (y_X-y_T)/(x_X-x_T),$$

and

$$l_{T,X}(S) \leftarrow (x_S-x_X)\lambda_{T,X}-(y_S-y_X).$$

Furthermore, in the electronic calculator 10, $l_2=l_{Y,Z}(S)$ is computed as follows:

$$\lambda_{Y,Z} \leftarrow (y_Z-y_Y)/(x_Z-x_Y),$$

and

$$l_{Y,Z}(S) \leftarrow (x_S - x_Z)\lambda_{Y,Z} - (y_S - y_Z).$$

Then, with the pairing computation program, the CPU 11 of the electronic calculator 10 functions as fourth computation means for computing, using the computation result in the first computation means, the computation result in the third computation means, and the value $l_3$ of the rational point $S(x_s, y_s)$ on the line passing through the rational points $(p\chi Q, p^3\chi Q)$, a rational function $f'_{\chi,Q}(S)$ as follows, in step S5:

[Formula 4]

$$f'_{\chi,Q}(S) = f_{\chi,Q}(S)^{1+p+p^3+p^{10}} \cdot l_1 \cdot l_2 \cdot l_3.$$

In particular, in this case, given that Frobenius endomorphism $\varphi_p$ of the rational function $f_{\chi,Q}(S)$ is $\varphi_p(f_{\chi,Q}(S)) = f_{\chi,Q}(S)^p$, using $\varphi_p{}^{10}(f_{\chi,Q}(S)) = f_{\chi,Q}(S)^{p^{\wedge}10}$ (here, $p^{\wedge}10$ represents $p^{10}$), the electronic calculator 10 computes:

[Formula 5]

$$f_{\chi,Q}(S)^{1+p^{10}} \cdot l_1.$$

Furthermore, using Frobenius endomorphism $\varphi_p$ of a value 1 of a rational point $S(x_s, y_s)$ on a line passing through rational points $(Q_1, Q_2)$, $Q_1, Q_2 \in G_2$, being a value of a rational point $S(x_s, y_s)$ on a line passing through rational points $(pQ_1, pQ_2)$, the electronic calculator 10 computes a rational function $f'_{\chi,Q}(S)$ by computing:

[Formula 7]

$$f_{\chi,Q}(S)^{p+p^3} \cdot l_3$$

which satisfies:

[Formula 6]

$$f_{\chi,Q}(S)^{p+p^3} \cdot l_3 = \phi_p^3(f_{\chi,Q}(S)^{1+p^{10}} \cdot l_1).$$

Specifically, the electronic calculator 10 performs computation as follows. Here, $p^{\wedge}3$ represents $p^3$.

    1. C←f^p^10
    2. C←C·f
    3. A←C·l_{T,X}(S)
    4. B←A ^p^3
    5. return A,B

Therefore,

[Formula 4]

$$f'_{\chi,Q}(S) = f_{\chi,Q}(S)^{1+p+p^3+p^{10}} \cdot l_1 \cdot l_2 \cdot l_3$$

can be calculated as:

$$f' \leftarrow A \cdot B \cdot l_{Y,Z}(S) .$$

In this manner, the use of Xate pairing can significantly reduce the computation amount thereby achieving faster pairing computation.

Then, with the pairing computation program, the CPU 11 of the electronic calculator 10 functions as fifth computation means for performing final exponentiation in the pairing e(Q,S) in step S6.

Specifically, the electronic calculator 10 performs computation as follows.

1. $f' \leftarrow f'^{p^6} \cdot f'^{-1}$
2. $f' \leftarrow f'^{p^2} \cdot f'$
3. $a \leftarrow (f'^6)^\chi \cdot (f'^5)^{p^6}$
4. $b \leftarrow a^p$
5. $b \leftarrow a.b$
6. compute $f'^p$, $f'^{p^2}$, and $f'^{p^3}$
7. $c \leftarrow b \cdot (f'^p)^2 \cdot f'^{p^2}$
8. $f' \leftarrow f'^{p^3} \cdot (C^6)^{\chi-2} \cdot c \cdot b \cdot (f'^p \cdot f')^9 \cdot a \cdot f'^4$
9. Return f'

In the electronic calculator 10 that configures an authentication server, an authentication process is performed using the result of pairing computation obtained as described above.

In the present embodiment, the description has been made to the case of the embedding degree k=12. However, for example, in the case of an embedding degree k=10, similar computation can also be performed.

With the embedding degree k=10, pairing e is defined by using:

$$G_1 = E[r] \cap \mathrm{Ker}(\varphi_p - [1]),$$

and

$$G_2 = E[r] \cap \mathrm{Ker}(\varphi_p - [p]),$$

as a nondegenerate bilinear map:

$$e : G_2 \times G_1 \rightarrow F^*_{p^{10}} / (F^*_{p^{10}})^r$$

where:

E is an additive group of rational points on a pairable elliptic curve defined over $F_{p^{10}}$ with an embedding degree of 10, and the curve equation is given by $y^2 = x^3 + ax + b$ where $a \in F_p$ and $b \in F_p$, E[r] is a set of rational points of a prime order r, and $\varphi_p$ is Frobenius endomorphism.

In this case, the order r and the trace t of the Frobenius endomorphism $\varphi_p$ are represented as follows, using an integer variable $\chi$.

$$r(\chi) = 25\chi^4 + 25\chi^3 + 15\chi^2 + 5\chi + 1$$

$$t(\chi) = 10\chi^2 + 5\chi + 3$$

Furthermore, p-adic expansion by a characteristic p of the integer variable $\chi$ is represented as follows.

$$5\chi = p^4 + p^5 + p^7 + p^8 = p^4(1 + p + P^3 + p^4) \pmod{r(\chi)}$$

Then, a value $l_4$ of a rational point $S(x_s, y_s)$ on a line passing through rational points $(xQ, p\chi Q)$ and a value $l_5$ of a rational point $S(x_s, y_s)$ on a line passing through rational points $(\chi Q + p\chi Q, p^3\chi Q + p^4\chi Q)$ are computed, and then using a value $l_6$ of a rational point $S(x_s, y_s)$ on a line passing through rational points $(p^3\chi Q, p^4\chi Q)$, a rational function $f'_{\chi,Q}(S)$ is computed by the following equation:

[Formula 21]

$$f'_{\chi,Q}(S) = \phi_p^4\left(f_{\chi,Q}(S)\right)^{1+p+p^3+p^4} \cdot l_4 \cdot l_5 \cdot l_6).$$

Similarly to the case of the embedding degree k=12, also in the case of the embedding degree k=10, the authentication server performs pairing computation based on a flowchart shown in Fig. 4 by executing the pairing computation program.

With the pairing computation program, as shown in Fig. 4, in step T1, the CPU 11 of the electronic calculator 10 functions as input means for inputting required data. More specifically, in the electronic calculator 10, data of the integer variable $\chi$ and data of the rational point Q stored beforehand in the memory device 13 are input in a predetermined register provided inside the CPU 11, and in addition, data of the rational point S temporarily stored as signature data in the memory device 13 is input in a predetermined register provided inside the CPU 11.

Then, with the pairing computation program, the CPU 11 of the electronic calculator 10 functions as the first computation means for performing computation of a rational function $f_{\chi,Q}(S)$ by Miller's algorithm, in step T2.

It is noted that in this step T2, the first equation in step S22 in the flowchart shown in Fig. 3 is given as follows.

$$1.\quad \lambda_{T,T} \leftarrow (3x_T^2 + a)/(2y_T)$$

Here, "a" denotes the first-order coefficient in the elliptic curve given by $y^2 = x^3 + ax + b$ where $a \in F_p$ and $b \in F_p$. Except for this first equation, computation of the rational function $f_{\chi,Q}(S)$ is performed similarly to the flowchart shown in Fig. 3.

Furthermore, in step T2, the electronic calculator 10 also computes $\chi Q$ along with the rational function $f_{\chi,Q}(S)$ and stores the computation result in a predetermined register.

Then, with the pairing computation program, the CPU 11 of the electronic calculator 10 functions as the second computation means for computing rational points $p\chi Q$, $\chi Q + p\chi Q$, $p^3\chi Q + p^4\chi Q$ in step T3.

In particular, in the second computation means, letting $\chi Q$ stored in the predetermined register in step T2 =R, using the relation of Frobenius endomorphism $\varphi_p$ of R being $\varphi_p(R) = pR$, computation is performed by assuming that the rational points are $p\chi Q = pR$, $\chi Q + p\chi Q = R + pR$, $p^3\chi Q + p^4\chi Q = p^3R + p^4R$.

Specifically, given $T = \chi Q = R$ where $X = pR$, $Y = R + pR$, $Z = p^3R + p^4R$, the electronic calculator 10 performs computation as follows:

$$X \leftarrow \varphi_p(T),$$

$$Y \leftarrow T+X,$$

and

$$Z \leftarrow \varphi_p^{\,3}(Y).$$

Then, with the pairing computation program, the CPU 11 of the electronic calculator 10 functions as the third computation means for computing the value $l_4$ of the rational point $S(x_s, y_s)$ on the line passing through the rational points $(\chi Q, p\chi Q)$ and the value $l_5$ of the rational point $S(x_s, y_s)$ on the line passing through the rational points $(\chi Q+pXQ, p^3\chi Q+p^4\chi Q)$, in step T4.

Specifically, in the electronic calculator 10, $l4=l_{T,X}(S)$ is computed as follows:

$$\lambda_{T,X} \leftarrow (y_X-y_T)/(x_X-x_T),$$

$$l_{T,X}(S) \leftarrow (x_S-x_X)\lambda_{T,X}-(y_S-y_X).$$

Furthermore, in the electronic calculator 10, $l_5=l_{Y,Z}(S)$ is computed as follows:

$$\lambda_{Y,Z} \leftarrow (y_Z-y_Y)/(x_Z-x_Y),$$

$$l_{Y,Z}(S) \leftarrow (x_S-x_Z)\lambda_{Y,Z}-(y_S-y_Z).$$

Then, with the pairing computation program, the CPU 11 of the electronic calculator 10 functions as the fourth computation means for computing, using the computation result in the first computation means, the computation result in the third computation means, and the value $l_6$ of the rational point $S(x_s, y_s)$ on the line passing through rational points $(p^3\chi Q, p^4\chi Q)$, a rational function $f'_{\chi,Q}(S)$ as follows, in step T5:

[Formula 21]

$$f'_{\chi,Q}(S) = \phi_p^4 \left( f_{\chi,Q}(S)^{1+p+p^3+p^4} \cdot l_4 \cdot l_5 \cdot l_6 \right).$$

In particular, in this case, using Frobenius endomorphism $\varphi_p$ of the rational function $f_{\chi,Q}(S)$ being $\varphi_p(f_{\chi,Q}(S)) = f_{\chi,Q}(S)^p$, the electronic calculator 10 computes:

[Formula 22]

$$f_{\chi,Q}(S)^{1+p} \cdot l_4.$$

Furthermore, using Frobenius endomorphism $\varphi_p$ of the value 1 of the rational point $S(x_s, y_s)$ on the line passing through the rational points $(Q_1, Q_2)$, $Q_1,Q_2 \in G_2$, being a value of the rational point $S(x_s, y_s)$ on a line passing through the rational points $(pQ_1, pQ_2)$, the electronic calculator 10 computes a rational function $f'_{\chi,Q}(S)$ by computing:

[Formula 24]

$$f_{\chi,Q}(S)^{p^3+p^4} \cdot l_6$$

which satisfies:

[Formula 23]

$$f_{\chi,Q}(S)^{p^3+p^4} \cdot l_6 = \phi_p^3\left(f_{\chi,Q}(S)^{1+p} \cdot l_4\right).$$

Specifically, the electronic calculator 10. performs computation as follows. Here, p^3 represents $p^3$.

1. $C \leftarrow f^p$
2. $C \leftarrow C \cdot f$
3. $A \leftarrow C \cdot l_{T,X}(S)$
4. $B \leftarrow A^{p^3}$
5. return A,B

Furthermore, the electronic calculator 10 performs computation as:

1. $f' \leftarrow A \cdot B \cdot l_{Y,Z}(S)$
2. $f' \leftarrow f'^{p^4}$

thereby computing:

[Formula 21]

$$f'_{\chi,Q}(S) = \phi_p^4\left(f_{\chi,Q}(S)^{1+p+p^3+p^4} \cdot l_4 \cdot l_5 \cdot l_6\right).$$

Then, with the pairing computation program, the CPU 11 of the electronic calculator 10 functions as the fifth computation means for performing final exponentiation in the pairing e(Q, S) in step T6.

In the electronic calculator 10 that configures an authentication server, an authentication process is performed using the result of pairing computation obtained as described above.

Furthermore, in the case of the embedding degree k=10, letting the rational function calculated according to Miller's algorithm be given by $f_{\chi^2,Q}(S)$ ($\chi^2$ represents $\chi^2$), pairing e(Q,S) can also be computed.

In this case, the order r and the trace t of the Frobenius endomorphism $\varphi_p$ is represented as follows, using an integer variable $\chi$.

$$r(\chi) = \chi^8 - 1$$

$$t(\chi) = -\chi^6 + \chi^4 - \chi^2 + 2$$

Furthermore, p-adic expansion by a characteristic p of the integer variable $\chi$ is represented as follows.

$$p\chi^2 = -p \pmod{r(\chi)}$$

Then, the electronic calculator 10 computes a rational function $f'_{\chi,Q}(S)$ by the following equation:

[Formula 25]

$$f'_{\chi,Q}(S) = f_{\chi^2,Q}(S)^p .$$

Therefore, according to the pairing computation program, in the electronic calculator 10, the pairing e(Q,S) can be computed as:

[Formula 26]

$$e(Q,S) = f'_{\chi,Q}(S)^{(p^{10}-1)/r} .$$

With the embedding degree k=8, pairing e is defined by using:

$$G_1 = E[r] \cap Ker(\varphi_p - [1]),$$

and

$$G_2 = E[r] \cap Ker(\varphi_p - [p]),$$

as a nondegenerate bilinear map:

$$e : G_2 \times G_1 \rightarrow F^*_p{}^8 / (F^*_p{}^8)^r$$

where:

E is an additive group of rational points on a pairable elliptic curve defined over $F_p{}^8$, and the curve equation is given by $y^2 = x^3 + ax$ where $a \in F_p$, E[r] is a set of rational points of a prime order r, and $\varphi_p$ is the Frobenius endomorphism.

In this case, the order r and the trace t of Frobenius endomorphism $\varphi_p$ are represented as follows, using an integer variable $\chi$.

$$r(\chi) = 9\chi^4 + 12\chi^3 + 8\chi^2 + 4\chi + 1$$

$$t(\chi) = -9\chi^3 - 3\chi^2 - 2\chi$$

Furthermore, p-adic expansion by a characteristic p of the integer variable $\chi$ is represented as follows.

$$3\chi = -1 - p^2 + p^3 \pmod{r(\chi)}$$

Then, using a value $l_7$ of a rational point $S(x_s, y_s)$ on a line passing through rational points $(\chi Q, \chi Q)$, a value $l_8$ of a rational point $S(x_s, y_s)$ on a line passing through rational points $(2\chi Q, \chi Q)$, a value $l_9$ of a rational point $S(x_s, y_s)$ on a line passing through rational points $(p^2 Q, (3\chi+1)Q)$, and a value $l_{10}$ of a rational point $S(x_s, y_s)$ on a line passing through rational points $(3\chi Q, Q)$, the electronic calculator 10 computes a rational function $f'_{\chi,Q}(S)$ using the following equation:

[Formula 27]

$$f'_{\chi,Q}(S) = f_{\chi,Q}(S)^3 \cdot l_7 \cdot l_8 \cdot l_9 \cdot l_{10}.$$

In other words, with the pairing computation program, the electronic calculator 10 performs computation of the rational function $f_{\chi,Q}(S)$ by Miller's algorithm as described above, computes $\chi Q$ along with the rational function $f_{\chi,Q}(S)$, and then stores the computation result in a predetermined register.

Then, letting $\chi Q$ stored in a predetermined register $=R$, using the relation of Frobenius endomorphism $\varphi_p$ of R being $\varphi_p(R)=pR$, the electronic calculator 10 computes rational points $2\chi Q$, $p^2\chi$, $3\chi Q$, $(3\chi+1)Q$, computes the values $l_7$, $l_8$, $l_9$, $l_{10}$ using the computation result, and computes the rational function $f'_{\chi,Q}(S)$.

Then, in the electronic calculator 10, the pairing $e(Q,S)$ can be computed as:

[Formula 28]

$$e(Q,S) = f'_{\chi,Q}(S)^{(p^8-1)/r}.$$

It is noted that, in the case of the embedding degree k=8, the order r and the trace t of the Frobenius endomorphism $\varphi_p$ may also be represented as follows, using the integer variable $\chi$.

$$r(\chi) = \chi^4 - 8\chi^2 + 25$$

$$t(\chi) = (2\chi^3 - 11\chi + 15)/15$$

In this case, p-adic expansion by the characteristic p of the integer variable $\chi$ is represented as follows.

$$\chi = -p + 2p^3 \pmod{r(\chi)}$$

In this case, using a value $l_{11}$ of a rational point $S(x_s, y_s)$ on a line passing through rational points $(pQ, \chi Q)$, the rational function $f'_{\chi,Q}(S)$ can also be computed by the following equation:

[Formula 29]

$$f'_{\chi,Q}(S) = f_{\chi,Q}(S) \cdot l_{11}.$$

Alternatively, in the case of the embedding degree k=8, letting the rational functions calculated according to Miller's algorithm be given by $f_{\chi^{\wedge}2,Q}(S)$ ($\chi^{\wedge}2$ represents $\chi^2$) and $f_{\chi,Q}(S)$, the pairing e (Q, S) can also be computed.
Here, the order r and the trace t of the Frobenius endomorphism $\varphi_p$ can also be represented as follows, using the integer variable $\chi$.

$$r(\chi) = \chi^8 - \chi^4 + 1$$

$$t(\chi) = \chi^5 - \chi + 1$$

In this case, p-adic expansion by the characteristic p of the integer variable $\chi$ is represented as follows.

$$P\chi + \chi^2 \equiv -p^2 \pmod{r(\chi)}$$

In this case, using a value $l_{12}$ of a rational point $S(x_s, y_s)$ on a line passing through rational points $(\chi^2 Q, p\chi Q)$, the rational function $f'_{\chi,Q}(S)$ can be computed by the following equation:

[Formula 30]

$$f'_{\chi,Q}(S) = f_{\chi^2,Q}(S) \cdot f_{\chi,Q}(S)^p \cdot l_{12}$$

.

Here, the electronic computation device 10 computes $\chi Q$, along with the computation of the rational function $f_{\chi^{\wedge}2,Q}(S)$ and the rational function $f_{\chi,Q}(S)$ by Miller's algorithm as described above, and stores the computation result in a predetermined register.
Then, letting $\chi Q$ stored in a predetermined register =R, using the relation of Frobenius endomorphism $\varphi_p$ of R being $\varphi_p(R)=pR$, the electronic calculator 10 computes a rational point $p\chi Q$, and computes the above-noted value $l_{12}$ using this computation result, and computes the rational function $f'_{\chi,Q}(S)$. Then, the pairing e(Q,S) can be computed as:

[Formula 28]

$$e(Q,S) = f'_{\chi,Q}(S)^{(p^8-1)/r}$$

.

With the embedding degree k=18, pairing e is defined by using:

$$G_1 = E[r] \cap Ker(\varphi_p - [1]),$$

and

$$G_2 = E[r] \cap Ker(\varphi_p - [p]),$$

as a nondegenerate bilinear map:

$$e : G_2 \times G_1 \rightarrow F^{*}{}_p{}^{18} / (F^{*}{}_p{}^{18})^{r}$$

where:

E is an additive group of rational points on a pairable elliptic curve defined over $F_p{}^{18}$, and the curve equation is given by $y^2 = x^3 + b$ where $b \in F_p$, E[r] is a set of rational points of a prime order r, and $\varphi_p$ is Frobenius endomorphism.

In this case, the order r and the trace t of the Frobenius endomorphism $\varphi_p$ are represented as follows, using an integer variable $\chi$.

$$r(\chi) = (\chi^6 + 37\chi^3 + 343) / 343$$

$$t(\chi) = (\chi^4 + 16\chi + 7) / 7$$

In this case, p-adic expansion by a characteristic p of the integer variable $\chi$ is represented as follows.

$$\chi = -3p + p^4 \pmod{r(\chi)}$$

Then, a value $l_{13}$ of a rational point S $(x_s, y_s)$ on a line passing through rational points $(3pQ, \chi Q)$, the electronic calculator 10 computes a rational function $f'_{\chi,Q}(S)$ by the following equation:

[Formula 31]

$$f'_{\chi,Q}(S) = f_{\chi,Q}(S) \cdot l_{13}.$$

In other words, with the pairing computation program, the electronic calculator 10 performs computation of the rational function $f_{\chi,Q}(S)$ by Miller's algorithm as described above, computes $\chi Q$ together with the rational function $f_{\chi,Q}(S)$, and then stores the computation result in a predetermined register.

Then, the electronic calculator 10 computes the above-noted value $l_{13}$ using the rational function $f_{\chi,Q}(S)$ and the computation result of $\chi Q$, and computes the rational function $f'_{\chi,Q}(S)$, Then, the pairing e(Q,S) can be computed as:

[Formula 32]

$$e(Q,S) = f'_{\chi,Q}(S)^{(p^{18}-1)/r}.$$

As described above, pairing computation is performed with Xate pairing to achieve faster pairing computation, thereby making group signatures using pairing computation into practical use.

INDUSTRIAL APPLICABILITY

In accordance with the present invention, it is possible to provide a high-speed pairing computation device and to provide digital group signature service of practical use.

**Claims**

1. A pairing computation device for defining pairing e by using:

$$G_1 = E[r] \cap Ker(\varphi_p - [1]),$$

and

$$G_2 = E[r] \cap Ker(\varphi_p - [p]),$$

as a nondegenerate bilinear map:

$$e : G_2 \times G_1 \rightarrow F^*{}_p{}^k / (F^*{}_p{}^k)^r,$$

where:

E is an additive group of rational points on a pairable elliptic curve defined over $F_p{}^k$ with an embedding degree of k, and the curve equation is given by $y^2 = x^3 + ax + b$ where $a \in F_p$ and $b \in F_p$,
E[r] is a set of rational points of a prime order r, and
$\varphi_p$ is Frobenius endomorphism,

computing pairing e(Q,S) where $S \in G_1$ and $Q \in G_2$, and outputting a result of the computation,
the pairing computation device comprising, where t is a trace of the Frobenius endomorphism $\varphi_p$, instead of computing the pairing e(Q,S) by using a rational function $f_{t-1,Q}(S)$ calculated according to Miller's algorithm as:

[Formula 2]

$$e(Q, S) = f_{t-1,Q}(S)^{(p^k - 1)/r} ,$$

and
the order r and the trace t of the Frobenius endomorphism $\varphi_p$ are used as functions of an integer variable $\chi$:

computation means for computing a rational function $f_{\chi,Q}(S)$;
computation means for computing a value of a rational point $S(x_s, y_s)$ on a line passing through a predetermined rational point;
computation means for computing a rational function $f'_{\chi,Q}(S)$ using computation results of these computation means; and
computation means for performing pairing computation by using the rational function $f'_{\chi,Q}(S)$ as:

[Formula 3]

$$e(Q, S) = f'_{\chi,Q}(S)^{(p^k - 1)/r} .$$

2. The pairing computation device according to claim 1, wherein the computation means for computing the rational function $f_{\chi,Q}(S)$ includes computation means for computing $\chi Q$, storing a result of the computation in a predetermined register, and computing the predetermined rational point by using the result of the computation of $\chi Q$.

3. The pairing computation device according to claim 2, wherein, if the embedding degree k=12, using the integer variable $\chi$, letting the order r and the trace t of the Frobenius endomorphism $\varphi_p$ be:

$$r(\chi) = 36\chi^4 - 36\chi^3 + 18\chi^2 - 6\chi + 1,$$

$$t(\chi) = 6\chi^2 + 1,$$

letting $\chi Q = R$, using a relation of Frobenius endomorphism $\varphi_p$ of R being $\varphi_p(R) = pR$, rational points $p^{10}\chi Q$, $\chi Q + p^{10}\chi Q$, $p\chi Q + p^3\chi Q$ are computed,
a value $l_1$ of the rational point $S(x_s, y_s)$ on a line passing through rational points $(\chi Q, p^{10}\chi Q)$ and a value $l_2$ of the rational point $S(x_s, y_s)$ on a line passing through rational points $(\chi Q + p^{10}\chi Q, p\chi Q + p^3\chi Q)$ are computed, and
the rational function $f'_{\chi,Q}(S)$ is computed by using a value $l_3$ of the rational point $S(x_s, y_s)$ on a line passing through rational points $(p\chi Q, p^3\chi Q)$ as:

[Formula 4]

$$f'_{\chi,Q}(S) = f_{\chi,Q}(S)^{1+p+p^3+p^{10}} \cdot l_1 \cdot l_2 \cdot l_3.$$

4. The pairing computation device according to claim 3, wherein
using Frobenius endomorphism $\phi_p$ of the rational function $f_{\chi,Q}(S)$ being $\varphi_p(f_{\chi,Q}(S)) = f_{\chi,Q}(S)^p$,

[Formula 5]

$$f_{\chi,Q}(S)^{1+p^{10}} \cdot l_1$$

is computed, and
using Frobenius endomorphism $\varphi_p$ of a value 1 of the rational point $S(x_s, y_s)$ on a line passing through rational points $(Q_1, Q_2)$, $Q_1, Q_2 \in G_2$, being a value of the rational point $S(x_s, y_s)$ on a line passing through rational points $(pQ_1, pQ_2)$, the rational function $f'\chi,Q(S)$ is computed by computing:

[Formula 7]

$$f_{\chi,Q}(S)^{p+p^3} \cdot l_3$$

which satisfies:

[Formula 6]

$$f_{\chi,Q}(S)^{p+p^3} \cdot l_3 = \phi_p^3(f_{\chi,Q}(S)^{1+p^{10}} \cdot l_1).$$

5. A pairing computation method for defining pairing e by using:

$$G_1 = E[r] \cap \mathrm{Ker}(\varphi_p - [1]),$$

and

$$G_2 = E[r] \cap \mathrm{Ker}(\varphi_p - [p]),$$

as a nondegenerate bilinear map:

$$e: G_2 \times G_1 \rightarrow F^{*}_{p}{}^{k} / (F^{*}_{p}{}^{k})^{r},$$

where:

E is an additive group of rational points on a pairable elliptic curve defined over $F_p{}^k$ with an embedding degree of k, and the curve equation is given by $y^2=x^3+ax+b$ where $a \in F_p$ and $b \in F_p$,
E[r] is a set of rational points of a prime order r, and
$\varphi_p$ is Frobenius endomorphism, and
computing pairing e(Q,S) where $S \in G_1$ and $Q \in G_2$ by an electronic calculator including a CPU,

the pairing computation method comprising steps of, where t is a trace of the Frobenius endomorphism $\varphi_p$, instead of computing the pairing e(Q,S) by using a rational function $f_{t-1,Q}(S)$ calculated according to Miller's algorithm as:

[Formula 2]

$$e(Q,S) = f_{t-1,Q}(S)^{(p^k-1)/r} ,$$

and
the order r and the trace t of the Frobenius endomorphism $\varphi_p$ are used as functions of an integer variable $\chi$:

causing the CPU of the electronic calculator to function as computation means for computing a rational function $f_{\chi,Q}(S)$;
causing the CPU of the electronic calculator to function as computation means for computing a value of a rational point $S(x_s, y_s)$ on a line passing through a predetermined rational point;
causing the CPU of the electronic calculator to function as computation means for computing a rational function $f'_{\chi,Q}(S)$ using results of the computations; and
causing the CPU of the electronic calculator to function as computation means for performing computation by using the rational function $f'_{\chi,Q}(S)$ as:

[Formula 3]

$$e(Q,S) = f'_{\chi,Q}(S)^{(p^k-1)/r} .$$

6. The pairing computation method according to claim 5, further comprising a step of causing the CPU of the electronic calculator to function as computation means for computing $\chi Q$ and computing the predetermined rational point by using the result of the computation of $\chi Q$, after the step of computing the rational function $f_{\chi,Q}(S)$.

7. A pairing computation program for defining pairing e by using:

$$G_1 = E[r] \cap Ker(\varphi_p - [1]),$$

and

$$G_2 = E[r] \cap Ker(\varphi_p - [p]),$$

as a nondegenerate bilinear map:

$$e: G_2 \times G_1 \rightarrow F^*_{p}{}^{k} / (F^*_{p}{}^{k})^{r},$$

where:

E is an additive group of rational points on a pairable elliptic curve defined over $F_P{}^k$ with an embedding degree of k, and the curve equation is given by $y^2 = x^3 + ax + b$ where $a \in F_p$ and $b \in F_p$,
E[r] is a set of rational points of a prime order r, and
$\varphi_p$ is Frobenius endomorphism, and
causing an electronic calculator including a CPU to compute pairing e(Q,S) where $S \in G_1$ and $Q \in G_2$,

the pairing computation program causing the electronic calculator to function as, where t is a trace of the Frobenius endomorphism $\varphi_p$, instead of causing computation of the pairing e(Q,S) by using a rational function $f_{t-1,Q}(S)$ calculated according to Miller's algorithm as:

[Formula 2]

$$e(Q,S) = f_{t-1,Q}(S)^{(p^k-1)/r},$$

and
the order r and the trace t of the Frobenius endomorphism $\varphi_p$ are used as functions of an integer variable $\chi$:

computation means for computing a rational function $f_{\chi,Q}(S)$;
computation means for computing a value of a rational point $S(x_s, y_s)$ on a line passing through a predetermined rational point;
computation means for computing a rational function $f'_{\chi,Q}(S)$ using results of the computations; and
computation means for performing computation by using the rational function $f'_{\chi,Q}(S)$ as:

[Formula 3]

$$e(Q,S) = f'_{\chi,Q}(S)^{(p^k-1)/r}.$$

8. The pairing computation program according to claim 7, wherein the pairing computation program causes the electronic calculator to function as
computation means for computing $\chi Q$; and
computation means for computing the predetermined rational point by using the result of the computation of $\chi Q$.

Fig. 1

START

INPUT INTEGER VARIABLE $\chi$, RATIONAL POINTS Q, S ⟋ S1

COMPUTE $f_{\chi,Q}(S)$ (COMPUTE $\chi Q$) ⟋ S2

COMPUTE RATIONAL POINTS $p^{10}\chi Q$, $\chi Q + p^{10}\chi Q$, $p\chi Q + p^3\chi Q$ ⟋ S3

COMPUTE VALUE I OF RATIONAL POINT S ON LINE PASSING THROUGH PREDETERMINED RATIONAL POINT ⟋ S4

COMPUTE $f'_{\chi,Q}(S)$ ⟋ S5

PERFORM EXPONENTIATION OF $F'_{\chi,Q}(S)^{(p^{12}-1)/r}$ ⟋ S6

Return

Fig. 2

START

$f \leftarrow 1, \quad T \leftarrow Q, \quad i \leftarrow [\log_2(\chi)]$ — S21

S22

1. $\lambda_{T,T} \leftarrow (3x_T^2)/(2y_T)$
2. $l_{T,T}(S) \leftarrow (x_s - x_T)\lambda_{T,T} - (y_s - y_T)$
3. $f \leftarrow f^2 \cdot l_{T,T}(S)$
4. Return f

1. $\lambda_{T,Q} \leftarrow (y_Q - y_T)/(x_Q - x_T)$
2. $l_{T,Q}(S) \leftarrow (x_s - x_Q)\lambda_{T,Q} - (y_s - y_Q)$
3. $f \leftarrow f \cdot l_{T,Q}(S)$
4. Return f
— S25

1. $x_{2T} \leftarrow \lambda_{T,T}^2 - 2x_T$
2. $y_{2T} \leftarrow (x_T - x_{2T})\lambda_{T,T} - y_T$
3. Return $T \leftarrow 2T$

S23

1. $x_{T+Q} \leftarrow \lambda_{T,Q}^2 - x_T - x_Q$
2. $y_{T+Q} \leftarrow (x_Q - x_{T+Q})\lambda_{T,Q} - y_Q$
3. Return $T \leftarrow T+Q$
— S26

S24 — $u_i$? — 1

S28

$i = i-1$ — NO — $i = 1$? — S27

0

YES

Return

Fig. 3

Fig. 4

## INTERNATIONAL SEARCH REPORT

| | International application No. |
|---|---|
| | PCT/JP2009/065099 |

A. CLASSIFICATION OF SUBJECT MATTER
G09C1/00(2006.01)i

According to International Patent Classification (IPC) or to both national classification and IPC

B. FIELDS SEARCHED

Minimum documentation searched (classification system followed by classification symbols)
G09C1/00

Documentation searched other than minimum documentation to the extent that such documents are included in the fields searched
Jitsuyo Shinan Koho          1922-1996   Jitsuyo Shinan Toroku Koho   1996-2009
Kokai Jitsuyo Shinan Koho    1971-2009   Toroku Jitsuyo Shinan Koho   1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | Ezekiel Justin Kachisa et.al., Constructing Brezing-Weng pairing friendly elliptic curves using elements in the cyclotomic field, Cryptology ePrint Archive, 2007, p.1-12 | 1-8 |
| A | Paulo S. L. M. Barreto et.al., Pairing-Friendly Elliptic Curves of Prime Order, Proceedings of SAC 2005, 2005, p.1-13 | 1-8 |
| A | SAKAMI et al., "Hamming Omomi no Chiisai Seisu Hensu o Parameter Settei ni Mochiita Twisted Ate Pairing no Kairyo", 2008 Nen Symposium on Cryptography and Information Security, 2008.01, pages 1 to 6 | 1-8 |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 September, 2009 (15.09.09) | 06 October, 2009 (06.10.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**EP 2 360 659 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005316267 A